# EUROPEAN PATENT SPECIFICATION

(11) **EP 2 123 064 B1**
(45) Date of publication and mention of the grant of the patent: **25.07.2012**
(21) Application number: 08702606.8
(22) Date of filing: 30.01.2008
(51) Int. Cl.: H04W 4/14

(54) **ROUTING OF MOBILE-ORIGINATING SHORT MESSAGES**
ROUTEN VON KURZNACHRICHTEN MIT MOBILURSPRUNG
ACHEMINEMENT DE MESSAGES COURTS PROVENANT DE MOBILES

(30) Priority: 30.01.2007 US 898095 P
(43) Date of publication of application: 25.11.2009
(73) Proprietor: Markport Limited, Dublin 2 (IE)
(72) Inventor: MACEK, Ondrej, 272 01 Kladno (CZ)
(74) Representative: Weldon, Michael James
(86) International application number: PCT/IE2008/000007
(87) International publication number: WO 2008/093311

(56) References cited:
- KR-A- 20050 019 549
- "Digital cellular telecommunications system (Phase 2+); Universal Mobile Telecommunications System (UMTS); Technical realization of Short Message Service (SMS) (3GPP TS 23.040 version 6.8.1 Release 6); ETSI TS 123 040" ETSI STANDARDS, LIS, vol. 3-T2, no. V6.8.1, 1 October 2006 (2006-10-01), XP014035453 ISSN: 0000-0001 cited in the application
- "Digital cellular telecommunications system (Phase 2+); Universal Mobile Telecommunications System (UMTS); Point-to-Point (PP) Short Message Service (SMS) support on Mobile Radio Interface (3GPP TS 24.011 version 6.0.0 Release 6); ETSI TS 124 011" ETSI STANDARDS, LIS, vol. 3-CN1, no. V6.0.0, 1 September 2003 (2003-09-01), XP014027557 ISSN: 0000-0001 cited in the application

## Description

### Introduction

The invention relates to routing of mobile-originating ("MO") short messages ("SM").

When a concatenated SM is being submitted from an MS to the SMSC, the MS has to submit each segment of a concatenated SM as a standalone message. This causes the following issues:
A Unnecessary overhead on the MS, serving MSC or SGSN and inter-working MSC:
   (a) A new TCAP dialogue between the serving MSC/SGSN and the inter-working MSC needs to be established for each segment of a SM: new TCAP dialogue related resources (for example state machines and timers) need to be allocated for each SM which should be submitted to the inter-working MSC. Submitting a mobile originated concatenated SM is thus more consuming in terms of resources and time than it would be in the case where only one dialogue is used.
   (b) For each SM (segment of a concatenated SM) a separate dialogue between the serving MSC and VLR has to be performed. Again, this causes unnecessary overhead in the network and slows down message submission.
B The mobile operators make use of load-sharing based on TCAP dialogues either on the SMSC itself (by introducing more than one inter-working MSC on a particular SMSC), or on a network node in front of more than one SMSC. In such cases each segment of a concatenated message is submitted to a different inter-working MSC for SMSC.
   Consequently a number of problems can arise:
   (a) It is unfeasible to associate and possibly also reassemble segments of the concatenated SM on the SMSC when this is required by the operator. The reason for this requirement can be routing of the message to a network based on different technology or simplifying of design and implementation of ESME applications.
   (b) Different SMSCs can attempt to deliver segments of an SM to a destination MS at the same time. When this happens, one of the segments is delivered and the others fail with the error MS Busy. This problem appears when the segments of an SM submitted to the SMSCs are delivered instantly because the destination MS is available on the network. More than 80% of SMs are delivered this way. KR 2005 0019549 describes transmission of multiple short messages, in which an SMS multiple transmission layer function is added.

The invention is directed towards providing for more efficient transmission of mobile originating short messages.

### Glossary

| 3GPP | 3^{rd} Generation Partnership Project |
|---|---|
| ASN.1 | Abstract Syntax Notation One |
| ETSI | European Telecommunications Standards Institute |
| IWMSC | Inter-Working Mobile Switching Centre |
| MAP | Mobile Application Part |
| MO | Mobile Originating |
| MS | Mobile Station |
| MSC | Mobile Switching Centre |
| PDU | Protocol Data Unit |
| SGSN | Serving GPRS Support Node |
| SM | Short Message |
| SM-RL | Short Message Relay Layer |
| SM-TP | Short Message Transfer Layer Protocol |
| SM-TL | Short Message Transfer Layer |
| SMSC | Short Message Service Centre |
| TCAP | Transaction Capabilities Application Part |
| TPDU | Transfer Protocol Data Unit |
| VLR | Visitor Location Register |

### SUMMARY OF THE INVENTION

According to the invention, there is provided a method of communicating mobile-originating messages in a mobile network, the method being as set out generally in claim 1.

Various embodiments of the method are set out in the claims 2 to 24 attached hereto.

In another aspect, the invention provides messaging systems as set out in claims 25 and 26 attached hereto.

In further aspects, the invention provides computer readable media as set out in claims 27 to 30 attached hereto.

### DETAILED DESCRIPTION OF THE INVENTION

### Brief Description of the Drawings

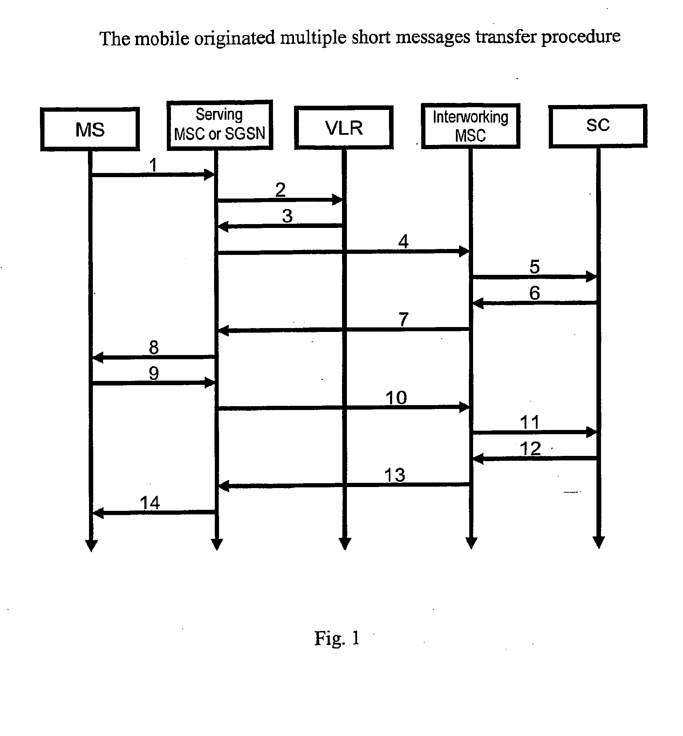

The invention will be more clearly understood from the following description of some embodiments thereof, given by way of example only with reference to the accompanying drawing in which:-
Fig. 1 is a message/signalling diagram for a mobile originating SM communication method of the invention.

### Description of the Embodiments

The invention involves an enhancement to the mobile-originating service supported by the Short Message Relay Layer (SM-RL). It includes enhancements to 3GPP 23.040, 3GPP 24.011, and 3GPP 29.002 to maintain an end-to-end dialogue between the MS and the inter-working MSC, and enables MO multiple SM transfer.

Referring to Fig. 1 a MO SM communication method involves a mobile station (MS), a serving MSC (or in other embodiments, a SGSN), a VLR, an inter-working MSC (IWMSC), and a service centre (SC).

When transferring SMs from the serving MSC/SGSN to the IWMSC, more than one message can be transferred within one dialogue. The overall MO message transmission is from the mobile device to the SC. This comprises a first leg between the mobile device and the serving element (MSC or SGSN) and a second leg between the serving element and the inter-working MSC. These two legs constitute one dialogue. The first leg uses a short message relay protocol, and the second leg uses MAP. There is a third leg, not fully standardized, from the inter-working MSC to the service centre (SC).

Use of a single dialogue is of particular benefit where there is concatenation of multiple messages derived from a single user-generated message which is over the stipulated number of characters.

The invention adds an information element (RP-MMS) to the RP-MO-DATA element. The purpose of this new information element is to indicate that there are more messages to follow.

The following discusses details of the enhancements for each leg of the path from MS to SC.
(1) Between the MS and the serving MSC or SGSN, the addition of a new information element to the RP-MO-DATA element is performed by introduction of a new PDU to the 3GPP 24.011 specification. Details are given below [Changes to the SM Relay Protocol section (3GPP 24.011)].
(2) In the second leg, between the serving MSC (or SGSN) and the inter-working MSC, the new information element for the RP-MO-DATA element is transported by a new parameter of the MAP-MO-FORWARD-SHORT-MESSAGE service. Details are given below [Changes on the MAP layer (3GPP 29.002) section].
(3) In the third leg, between the inter-working MSC and the SC, the bearer protocol which transports the SM-TP PDUs as defined in 3GPP 23.040 is not fully specified and may be a proprietary implementation. The implementation may be advantageously enhanced to transport the additional information element of the RP-MO-DATA element.

The following is a summary of the message transfers of Fig. 1.
1. RP-DATA-NL (amended 3GPP 24.011)
   usage of RP-DATA-NL instead of RP-DATA indicates that further RP-DATA(-NL) are to follow.
2. MAP-SEND-INFO-FOR-MO-SMS Request (3GPP 29.002). Advantageously, only one VLR interrogation is required for the dialogue, giving rise to less network overhead
3. MAP-SEND-INFO-FOR-MO-SMS Response (3GPP 29.002)
4. MAP-MO-FORWARD-SHORT-MESSAGE Request (3GPP 29.002) new parameter "More Messages To Send" is set
5. Short Message (3GPP 23.040)
6. Short Message Acknowledgement (3GPP 23.040)
7. MAP-MO-FORWARD-SHORT-MESSAGE Response (3GPP 29.002)
8. RP-ACK (3GPP 24.011)
9. RP-DATA (3GPP 24.011)
   usage of RP-DATA indicates that it is the last SM/segment to transfer
10. MAP-MO-FORWARD-SHORT-MESSAGE Request (3GPP 29.002) new parameter "More Messages To Send" is not set
11. Short Message (3GPP 23.040)
12. Short Message Acknowledgement. (3GPP 23.040)
13. MAP-MO-FORWARD-SHORT-MESSAGE Response (3GPP 29.002)
14. RP-ACK (3GPP 24.011)

The following outlines requirements for the communication method.

Changes on the MAP layer (3GPP 29.002):
To the MAP-MO-FORWARD-SHORT-MESSAGE service of the MAP there will be added a new parameter (the parameter is referred to as "More Messages To Send" for the purposes of this document) which will indicate that further SM(s) are to follow. The ASN.1 definition of MO-ForwardSM-Arg type will be amended. To reflect this, the procedures (SDL, text descriptions and work flow diagrams) for Mobile Originated SM Transfer will require amendments on both the IWMSC and the MSC sides.

Changes on the SM-RL layer (3GPP 23.040):
A new information element is added within the existing RP-MO-DATA element and is referred to as RP-MMS for the purposes of this document, indicating that further SM(s) are to follow.
Within the 3GPP 23.040 specification the definitions of the Short Message Mobile Originated procedures would need to be amended. The message-flow diagrams would need to reflect the option of transporting more than one SM during one operation.

Changes to the SM Relay Protocol (3GPP 24.011):
Instead of transporting the new information element of the RP-MO-DATA element as an extra parameter, RP-MMS, of the RP-DATA PDU, it is proposed that a new PDU type will be introduced. One of the reserved values of the RP-Message Type parameter will be used. The new PDU will be referred to as RP-DATA-NL (RP-Data-Not-Last) for the purposes of this document. The RP-DATA-NL PDU will have the same structure as the RP-DATA PDU for the direction from the MS to the network. If this new PDU is used, it will indicate in advance that further subsequent SM(s) will be transferred from the MS to the network. The sequence of the SMs transferred from the MS to the network will consist of zero or more RP-DATA-NL PDUs and one RP-DATA PDU at the end. The new RP-DATA-NL PDU will be acknowledged by the existing RP-ACK PDU.

The reason to use a new PDU (with the same parameters as the original RP-DATA PDU, with the exception of the value of the RP-Message Type parameter) is that there is insufficient space for a new extra parameter. If a new parameter were added, the maximum size of RP-User Data would need to be decreased. Consequently the maximum length of an SM would need to be decreased. Using the method of the invention, the extra information element RP-MMS will be transferred using the extra value of a fixed-length RP-Message Type parameter and the rest of the PDU will remain the same. The benefits are that:
(1) There is no further limitation to the RP-User Data parameter.
(2) The PDU is almost the same as the existing one. Because the change is relatively small, it should ease and minimize implementation changes on the MSs and MSCs/SGSNs. Existing code for encoding/decoding the RP-DATA PDU can be used, requiring just a new value of the RP-Message Type parameter to be added/recognized.

With respect to 3GPP 24.011, the implementation requires changes only on the SM-RP protocol of the SM-RL layer. Particularly, the existing option to maintain the radio interface between transfers of Short Messages can be used, as described in section *5.4 Concatenating short message or notification transfers* of the 3GPP 24.011 Specification.

As regards the third leg, in one embodiment when a message is received by the inter-working MSC from the serving MSC a process decodes the MAP layer and extracts the "More Messages To Send" parameter from the MAP-MO-FORWARD-SHORT-MESSAGE request. The extracted "More Messages To Send" parameter along with other useful parameters from the TCAP and MAP layers are put into a proprietary message in the bearer which along with the extracted SM-TP PDU are sent to an interface process on the service centre which is capable of decoding the proprietary message. If configured to do so, this interface process can apply re-assembly procedures to the segments of the concatenated message, and storage to the message database of the service centre. The reassembled message may be stored as a single message.

This implementation introduces the advantages of multiple SM transfer to the mobile originated direction but it retains backward compatibility:
(1) A MS, which does not support mobile-originated multiple SM transfer can be used with an MSC/SGSN which does.
(2) A MSC/SGSN, which does not support mobile-originated multiple SM transfer can be used with an inter-working MSC for SMS (SMSC) which does.

A MS, which supports MO multiple SM transfer can attempt to transfer SMs separately in the case that RP-DATA-NL PDU is not recognized by the serving MSC/SGSN. The MS can detect that the serving MSC/SGSN does not support the new PDU by receiving RP-ERROR message with cause "#97: message type non-existent or not implemented". See 3GPP 24.011 section *9.3.3 Unknown or unforeseen message type* for details.

The invention involves improving protocols used in Public Land Mobile Networks for transferring Short Messages, particularly for transferring Short Messages from the Mobile Station (MS) to the Short Message Service Center (SMSC). The improvement is applicable to 2G, 2.5G and 3G PLMNs and beyond. The improvement is applicable to GSM, ANSI and similar technologies. GSM is used as an example to explain the invention and possible implementation.

From the GSM specifications point of view, the protocols/specifications improved by this invention are
(1) The Short Messages Relay Layer defined by the 3GPP 23.040 Specification (ETSI 03.40).
(2) The Short Message Relay Protocol defined by 3GPP 24.011 (ETSI 04.11) Specification.
(3) The Mobile Application Part defined by 3GPP 29.002 Specification (ETSI 09.02).

From the PLMN topology point of view, the implementation of the invention expects changes in the hardware/software/firmware on the
(1) Mobile Stations (MSs)
(2) Mobile Switching Centers (MSCs)
(3) Interworking MSC for SMS, often co-located or associated with Short Message Service Center(s) (SMSC(s)).

It will be appreciated that the invention achieves much improved communication of MO SMs, reducing communication and transmission resource overhead on mobile stations, network elements and communication infrastructure in the MO path.

Concatenated message transmission has been described above, however it will also be appreciated that the invention also advantageously supports multiple independent short messages. Thus a user could compose multiple messages which could be buffered on the handset when the user is out of coverage, and then efficiently sent in one dialogue using the invention when the user is back in coverage.

The invention is not limited to the embodiments described but may be varied in construction and detail. For example, it is not essential to introduce a new PDU into the SM Relay Protocol layer. The same functionality could be achieved for example by overloading existing parameter(s) of an existing PDU. Also, it is not essential to provide for multiple SM transfer along all three legs. If it is only performed for the first two legs significant network improvements are achieved, in particular for radio link and network signaling optimization.

## Claims

1. A method of communicating mobile-originating messages in a mobile network, the method comprising the steps of transmitting, in one dialogue, a plurality of short messages in a route from the mobile device to at least an inter-working MSC, the route including a first leg (1) from the mobile device to a serving element and a second leg (4) from the serving element to the inter-working MSC, **characterized in that** the method includes transmitting additional information in at least one leg to indicate that more messages are to follow within the same dialogue.

2. A method as claimed in claim 1, wherein the dialogue uses a short message relay protocol in the first leg (1).

3. A method as claimed in claims 1 or 2, wherein the dialogue uses a MAP protocol in the second leg (4).

4. A method as claimed in any preceding claim, wherein the additional information is transmitted as an additional information element in an RP-MO-DATA element.

5. A method as claimed in any preceding claim, wherein the additional information is transported for at least one leg using an alternative PDU selected for the purposes of indicating that more messages are to follow and containing message data in a conventional manner.

6. A method as claimed in claim 5, wherein said leg is the first leg (1).

7. A method as claimed in either of claims 5 or 6, wherein the alternative PDU uses a reserved value of the RP-Message Type parameter.

8. A method as claimed in claim 7, wherein the alternative PDU (RP-DATA-NL) includes message data and has the same structure as another message data PDU (RP-DATA) also transmitted in this leg.

9. A method as claimed in any of claims 5 to 8, comprising the further step of sending an acknowledgement of the alternative PDU.

10. A method as claimed in any of claims 1 to 4, wherein the additional information is transported for at least one leg as an additional information element of an existing PDU.

11. A method as claimed in claim 10, wherein said leg is the second leg (4).

12. A method as claimed in either of claims 10 or 11, wherein the additional information is added to a MAP service for forwarding a mobile-originating short message.

13. A method as claimed in either of claims 11 or 12, wherein the additional information element is transported by a new parameter of the MAP-MO-FORWARD-SHORT-MESSAGE service.

14. A method as claimed in any preceding claim, wherein the method includes only one VLR interrogation for a sequence of short messages.

15. A method as claimed in any preceding claim, wherein the method includes forwarding the short messages on a third leg (5) from the inter-working MSC to a service centre.

16. A method as claimed in claim 15, wherein the method includes transmitting additional information in the third leg (5) to indicate that more messages are to follow, and said additional information is transported in a bearer protocol.

17. A method as claimed in claim 16, wherein when a message is received (4) by the inter-working MSC from the serving element a process decodes the MAP layer, and extracts the "More Messages To Send" parameter from the MAP-MO-FORWARD-SHORT-MESSAGE request, and the extracted "More Messages To Send" parameter along with other useful parameters from the TCAP and MAP layers and the extracted SM-TP PDU are put into a proprietary-format message in the bearer which is sent to an interface process on the service centre.

18. A method as claimed in claim 17, wherein the service centre interface process receives a plurality of said proprietary-format messages (5, 11), decodes said messages and reassembles the segments and submits them all to a message database of the service centre as a single message

19. A method as claimed in any preceding claim, wherein the method includes transmitting information (10) in at least one leg to indicate that no more messages are to follow within the same dialogue.

20. A method as claimed in claim 19, wherein said information is conveyed by setting a specific parameter RP-MMS to false.

21. A method as claimed in claim 19, wherein said information is conveyed (10) by omission of the RP-MMS parameter.

22. A method as claimed in claim 19, wherein said information is conveyed by transport of the conventional RP-DATA-PDU instead of the RP-DATA-NL.

23. A method as claimed in any preceding claim, wherein the serving element is an MSC.

24. A method as claimed in any of claims 1 to 22, wherein the serving element is an SGSN.

25. A message communication system comprising a mobile device, a serving element, a VLR, and an inter-working MSC comprising means for performing a method as claimed in any of claims 1 to 14

26. A message communication system as claimed in claim 25 further comprising a service centre and the system comprises means for performing a method as claimed in any of claims 15 to 24.

## Patentansprüche

1. Verfahren zum Übermitteln von von einem Mobilgerät ausgehenden Nachrichten in einem Mobilfunknetz, wobei das Verfahren die folgenden Schritte beinhaltet: Senden, in einem Dialog, mehrerer Kurznachrichten in einer Route von dem Mobilfunkgerät zu wenigstens einer zusammenarbeitenden MSC, wobei die Route einen ersten Zweig (1) von dem Mobilfunkgerät zu einem Serving-Element und einen zweiten Zweig (4) von dem Serving-Element zu der zusammenarbeitenden MSC beinhaltet, **dadurch gekennzeichnet, dass** das Verfahren das Senden zusätzlicher Informationen in wenigstens einem Zweig beinhaltet, um anzuzeigen, dass weitere Nachrichten im selben Dialog folgen werden.

2. Verfahren nach Anspruch 1, wobei der Dialog ein Kurznachrichten-Relay-Protokoll im ersten Zweig (1) benutzt.

3. Verfahren nach Anspruch 1 oder 2, wobei der Dialog ein MAP-Protokoll im zweiten Zweig (4) benutzt.

4. Verfahren nach einem der vorherigen Ansprüche, wobei die zusätzlichen Informationen als zusätzliches Informationselement in einem RP-MO-DATA-Element gesendet werden.

5. Verfahren nach einem der vorherigen Ansprüche, wobei die zusätzlichen Informationen für wenigstens einen Zweig mit einer alternativen PDU transportiert werden, die gewählt wird, um anzuzeigen, dass weitere Nachrichten folgen, und die Nachrichtendaten auf konventionelle Weise enthält.

6. Verfahren nach Anspruch 5, wobei der genannte Zweig der erste Zweig (1) ist.

7. Verfahren nach Anspruch 5 oder 6, wobei die alternative PDU einen reservierten Wert des RP-Nachrichtentyp-Parameters benutzt.

8. Verfahren nach Anspruch 7, wobei die alternative PDU (RP-DATA-NL) Nachrichtendaten beinhaltet und dieselbe Struktur hat wie eine andere Nachrichtendaten-PDU (RP-DATA), die ebenfalls in diesem Zweig gesendet wird.

9. Verfahren nach einem der Ansprüche 5 bis 8, das den weiteren Schritt des Sendens einer Bestätigung der alternativen PDU beinhaltet.

10. Verfahren nach einem der Ansprüche 1 bis 4, wobei die zusätzlichen Informationen für wenigstens einen Zweig als zusätzliches Informationselement einer existierenden PDU transportiert werden.

11. Verfahren nach Anspruch 10, wobei der genannte Zweig der zweite Zweig (4) ist.

12. Verfahren nach Anspruch 10 oder 11, wobei die zusätzlichen Informationen zu einem MAP-Service zum Weiterleiten einer von einem Mobilgerät ausgehenden Kurznachricht hinzugefügt werden.

13. Verfahren nach Anspruch 11 oder 12, wobei das zusätzliche Informationselement von einem neuen Parameter des MAP-MO-FORWARD-SHORT-MESSAGE Service transportiert wird.

14. Verfahren nach einem der vorherigen Ansprüche, wobei das Verfahren nur eine VLR-Abfrage für eine Folge von Kurznachrichten beinhaltet.

15. Verfahren nach einem der vorherigen Ansprüche, wobei das Verfahren das Weiterleiten der Kurznachrichten auf einem dritten Zweig (5) von der zusammenarbeitenden MSC zu einer Servicezentrale beinhaltet.

16. Verfahren nach Anspruch 15, wobei das Verfahren das Senden zusätzlicher Informationen im dritten Zweig (5) beinhaltet, um anzuzeigen, dass weitere Nachrichten folgen sollen, und die genannten zusätzlichen Informationen in einem Trägerprotokoll transportiert werden.

17. Verfahren nach Anspruch 16, wobei, wenn die zusammenarbeitende MSC eine Nachricht vom Serving-Element empfängt (4), ein Prozess die MAP-Schicht decodiert und den "weitere Nachrichten zu senden" Parameter aus der MAP-MO-FORWARD-SHORT-MESSAGE Anforderung extrahiert, und der extrahierte "weitere Nachrichten zu senden" Parameter zusammen mit anderen nützlichen Parametern aus der TCAP- und der MAP-Schicht und der extrahierten SM-TP PDU in eine Nachricht in einem proprietären Format im Träger gesetzt wird, die zu einem Schnittstellenprozess auf der Servicezentrale gesendet wird.

18. Verfahren nach Anspruch 17, wobei der Servicezentralen-Schnittstellenprozess mehrere der genannten Proprietäres-Format-Nachrichten (5, 11) empfängt, die genannten Nachrichten decodiert und die Segmente neu zusammensetzt und sie alle als eine einzige Nachrichten einer Nachrichtendatenbank der Servicezentrale submittiert.

19. Verfahren nach einem der vorherigen Ansprüche, wobei das Verfahren das Senden von Informationen (10) in wenigstens einem Zweig beinhaltet, um anzuzeigen, dass keine weiteren Nachrichten im selben Dialog folgen werden.

20. Verfahren nach Anspruch 19, wobei die genannten Informationen durch Setzen eines bestimmten Parameters RP-MMS auf falsch übertragen werden.

21. Verfahren nach Anspruch 19, wobei die genannten Informationen durch Weglassen des RP-MMS Parameters übertragen (10) werden.

22. Verfahren nach Anspruch 19, wobei die genannten Informationen durch Transportieren der konventionellen RP-DATA-PDU anstatt des RP-DATA-NL übertragen werden.

23. Verfahren nach einem der vorherigen Ansprüche, wobei das Serving-Element eine MSC ist.

24. Verfahren nach einem der Ansprüche 1 bis 22, wobei das Serving-Element ein SGSN ist.

25. Nachrichtenübermittlungssystem, das ein Mobilfunkgerät, ein Serving-Element, ein VLR und eine zusammenarbeitende MSC umfasst, umfassend Mittel zum Ausführen eines Verfahrens nach einem der Ansprüche 1 bis 14.

26. Nachrichtenübermittlungssystem nach Anspruch 25, das ferner eine Servicezentrale umfasst und das System Mittel zum Ausführen eines Verfahrens nach einem der Ansprüche 15 bis 24 umfasst.

## Revendications

1. Un procédé de communication de messages provenant de mobiles dans un réseau mobile, le procédé comprenant les opérations de transmission, en un dialogue unique, d'une pluralité de messages courts dans un trajet du dispositif mobile à au moins un MSC d'interfonctionnement, le trajet comprenant un premier tronçon (1) du dispositif mobile à un élément de desserte et un deuxième tronçon (4) de l'élément de desserte au MSC d'interfonctionnement, **caractérisé en ce que** le procédé comprend la transmission d'informations additionnelles dans au moins un tronçon de façon à indiquer que d'autres messages doivent suivre dans le même dialogue.

2. Un procédé selon la Revendication 1, où le dialogue utilise un protocole de relais de messages courts dans le premier tronçon (1).

3. Un procédé selon l'une quelconque des Revendications 1 ou 2, où le dialogue utilise un protocole MAP dans le deuxième tronçon (4).

4. Un procédé selon l'une quelconque des Revendications précédentes, où les informations additionnelles sont transmises sous la forme d'un élément d'information additionnel dans un élément RP-MO-DATA.

5. Un procédé selon l'une quelconque des Revendications précédentes, où les informations additionnelles sont transportées sur au moins un tronçon au moyen d'une autre PDU sélectionnée dans le but d'indiquer que d'autres messages doivent suivre et contenant des données de message sous une forme conventionnelle.

6. Un procédé selon la Revendication 5, où ledit tronçon est le premier tronçon (1).

7. Un procédé selon l'une quelconque des Revendications 5 ou 6, où l'autre PDU utilise une valeur réservée du paramètre de type de message RP.

8. Un procédé selon la Revendication 7, où l'autre PDU (RP-DATA-NL) comprend des données de message et possède la même structure qu'une autre PDU de données de message (RP-DATA) également transmise dans ce tronçon.

9. Un procédé selon l'une quelconque des Revendications 5 à 8, comprenant l'opération complémentaire d'envoi d'un accusé de réception de l'autre PDU.

10. Un procédé selon l'une quelconque des Revendications 1 à 4, où les informations additionnelles sont transportées sur au moins un tronçon sous la forme d'un élément d'information additionnel d'une PDU existante.

11. Un procédé selon la Revendication 10, où ledit tronçon est le deuxième tronçon (4).

12. Un procédé selon l'une quelconque des Revendications 10 ou 11, où les informations additionnelles sont ajoutées à un service MAP pour l'acheminement d'un message court provenant de mobiles.

13. Un procédé selon l'une quelconque des Revendications 11 ou 12, où l'élément d'information additionnel est transporté par un nouveau paramètre du service MAP-MO-FORWARD-SHORT-MESSAGE.

14. Un procédé selon l'une quelconque des Revendications précédentes, où le procédé comprend une seule interrogation de VLR pour une séquence de messages courts.

15. Un procédé selon l'une quelconque des Revendications précédentes, où le procédé comprend l'acheminement des messages courts sur un troisième tronçon (5) à partir du MSC d'interfonctionnement à un centre de service.

16. Un procédé selon la Revendication 15, où le procédé comprend la transmission d'informations additionnelles dans le troisième tronçon (5) destinées à indiquer que d'autres messages doivent suivre, et lesdites informations additionnelles sont transportées dans un protocole de porteuse.

17. Un procédé selon la Revendication 16, où, lorsque un message est reçu (4) par le MSC d'interfonctionnement à partir de l'élément de desserte, un processus décode la couche MAP et extrait le paramètre "Autres messages à envoyer" de la demande MAP-MO-FORWARD-SHORT-MESSAGE, et le paramètre "Autres messages à envoyer" extrait ainsi que d'autres paramètres utiles provenant des couches TCAP et MAP et des PDU SM-TP extraites sont placés dans un message à format propriétaire dans la porteuse qui est envoyé à un processus d'interface dans le centre de service.

18. Un procédé selon la Revendication 17, où le processus d'interface de centre de service reçoit une pluralité desdits messages à format propriétaire (5, 11), décode lesdits messages et réassemble les segments et les soumet tous à une base de données de messages du centre de service sous la forme d'un message unique.

19. Un procédé selon l'une quelconque des Revendications précédentes, où le procédé comprend la transmission d'informations (10) dans au moins un tronçon destinées à indiquer qu'aucun autre message ne doit suivre dans le même dialogue.

20. Un procédé selon la Revendication 19, où lesdites informations sont acheminées par le réglage d'un paramètre RP-MMS spécifique sur faux.

21. Un procédé selon la Revendication 19, où lesdites informations sont acheminées (10) par omission du paramètre RP-MMS.

22. Un procédé selon la Revendication 19, où lesdites informations sont acheminées par un transport de la RP-DATA-PDU conventionnelle au lieu de la RP-DATA-NL.

23. Un procédé selon l'une quelconque des Revendications précédentes, où l'élément de desserte est un MSC.

24. Un procédé selon l'une quelconque des Revendications 1 à 22, où l'élément de desserte est un SGSN.

25. Un système de communication de messages comprenant un dispositif mobile, un élément de desserte, un VLR et un MSC d'interfonctionnement comprenant un moyen d'exécution d'un procédé selon l'une quelconque des Revendications 1 à 14.

26. Un système de communication de messages selon la Revendication 25 comprenant en outre un centre de service et le système comprend un moyen d'exécution d'un procédé selon l'une quelconque des Revendications 15 à 24.
